# EUROPEAN PATENT APPLICATION

(11) **EP 4 468 485 A1**
(43) Date of publication of application: **27.11.2024**
(21) Application number: 22931740.9
(22) Date of filing: 28.09.2022
(51) Int. Cl.: H01M 50/289, H01M 50/50

(54) **BATTERY CELL, BATTERY MODULE, BATTERY, AND POWER-CONSUMING APPARATUS**

(30) Priority: 18.03.2022 WO PCT/CN2022/081730
(71) Applicant: Contemporary Amperex Technology (Hong Kong) Limited, Central, Central And Western District (HK)
(72) Inventor: ZHAO, Qian, Ningde, Fujian 352100 (CN); CAO, Junqi, Ningde, Fujian 352100 (CN); ZOU, Qifan, Ningde, Fujian 352100 (CN)
(74) Representative: Jacob, Reuben Ellis
(86) International application number: PCT/CN2022/122119
(87) International publication number: WO 2023/173721

(57) **Abstract**

Provided in the present application are a battery cell, a battery module, a battery, and a power-consuming apparatus. The battery cell comprises: a housing; and a first electrode assembly group and a second electrode assembly group, which are accommodated in the housing, wherein the first electrode assembly group and the second electrode assembly group are arranged in a first direction, the first electrode assembly group and the second electrode assembly group respectively comprise at least one electrode assembly, and an electrode terminal of the first electrode assembly group and an electrode terminal of the second electrode assembly group are respectively located on two walls of the housing that are oppositely arranged in the first direction. By means of the battery cell, the energy density of the battery cell can be effectively improved.

## Description

This application claims priority to PCT Patent Application No. PCT/CN2022/081730, filed with the China National Intellectual Property Administration on March 18, 2022 and entitled "BATTERY CELL AND MANUFACTURING METHOD AND MANUFACTURING SYSTEM THEREOF, BATTERY, AND ELECTRIC APPARATUS", which is incorporated herein by reference in its entirety.

### TECHNICAL FIELD

This application relates to the field of battery technologies, and in particular, to a battery cell, a battery module, a battery, and an electric apparatus.

### BACKGROUND

Energy conservation and emission reduction are crucial to sustainable development of the automobile industry. In this context, electric vehicles, with their advantages in energy conservation and environmental protection, have become an important part of the sustainable development of the automobile industry. For electric vehicles, battery technology is an important factor in connection with their development.

With the development of battery technology, the energy density of batteries has attracted more and more attention. Especially the energy density of battery cells in batteries can directly affect the energy density of batteries. Therefore, how to improve the energy density of battery cells is still a problem that needs to be solved.

### SUMMARY

This application provides a battery cell, a battery module, a battery, and an electric apparatus, to effectively improve the energy density of battery cells.

According to a first aspect, a battery cell is provided, including a housing; and a first electrode assembly group and a second electrode assembly group that are accommodated within the housing, where the first electrode assembly group and the second electrode assembly group are arranged along a first direction, the first electrode assembly group and the second electrode assembly group each include at least one electrode assembly, and electrode terminals of the first electrode assembly group and electrode terminals of the second electrode assembly group are respectively located on two walls of the housing that are disposed opposite along the first direction.

As compared with the first electrode assembly group and the second electrode assembly group being separately accommodated in a housing and arranged along the first direction, the battery cell provided in this embodiment of this application can reduce the space occupied by the housing at the bottom of the battery cell and improve the energy density of the battery cell. In addition, considering that the battery may include a plurality of battery cells, when the battery cell provided in this embodiment of this application is used to form a battery, fewer battery cells can be used to provide the same energy. This can also reduce structures in the battery box used to fix the battery cells, thereby further improving the energy density of the battery. Under a same size design of battery module, compared with a battery module obtained using traditional battery cells, the battery module obtained using battery cells provided in this embodiment of this application can have a 7% increase in volume utilization rate and energy density.

In addition, the first electrode assembly group and the second electrode assembly group each correspond to one pair of electrode terminals, ensuring that the operation of a plurality of groups of electrode assemblies in the battery cell does not affect each other, even if one group of electrode assemblies has an abnormality, the other group of electrode assemblies can still work normally. In addition, arranging the two groups of independently operating electrode assemblies in the first direction can increase the size of the battery cell in the first direction, and avoid an increase in the internal resistance caused by only increasing the height of the electrode assemblies.

Furthermore, in this embodiment of this application, the size of the battery cell can be designed according to space reserved for the battery by the electric device without affecting the performance of the battery cell, thereby maximizing the energy density of the battery cell, improving production efficiency, and reducing production costs.

In some embodiments, the first electrode assembly group includes a plurality of first electrode assembly subgroups, the first electrode assembly subgroup includes at least one electrode assembly, the plurality of first electrode assembly subgroups are arranged in a row along a second direction, and each first electrode assembly subgroup is connected to one pair of electrode terminals, the second direction being perpendicular to the first direction; and the second electrode assembly group includes a plurality of second electrode assembly subgroups, the second electrode assembly subgroup includes at least one electrode assembly, the plurality of second electrode assembly subgroups are arranged in a row along the second direction, and each second electrode assembly subgroup is connected to one pair of electrode terminals.

With the plurality of electrode assembly subgroups disposed, a plurality of electrode assemblies can be accommodated in one housing. Compared with a battery cell whose electrode assemblies are accommodated in housings respectively, the battery cell provided in this embodiment of this application can further reduce the space occupied by the housing and improve the energy density of the battery cell. When the battery cell provided in this embodiment of this application is used to form a battery, further, fewer battery cells can be used to provide the same energy, thereby reducing structures in the battery box used to fix the battery cells and further improving the energy density of the battery.

In some embodiments, the first electrode assembly group includes a plurality of first electrode assembly subgroups, the first electrode assembly subgroup includes at least one electrode assembly, the plurality of first electrode assembly subgroups are arranged into an array along the second direction and a third direction, and each first electrode assembly subgroup is connected to one pair of electrode terminals, the first direction, the second direction, and the third direction being perpendicular to each other; and the second electrode assembly group includes a plurality of second electrode assembly subgroups, the second electrode assembly subgroup includes at least one electrode assembly, the plurality of second electrode assembly subgroups are arranged into an array along the second direction and the third direction, and each second electrode assembly subgroup is connected to one pair of electrode terminals.

Disposing a plurality of electrode assembly subgroups in the second direction and the third direction can further reduce the space occupied by the housing in a plurality of directions and improve the energy density of the battery cell. When the battery cell provided in this embodiment of this application is used to form a battery, further, fewer battery cells can be used to provide the same energy, thereby reducing structures in the battery box used to fix the battery cells and further improving the energy density of the battery.

In some embodiments, the first electrode assembly group includes a plurality of electrode assemblies arranged along a second direction, and the plurality of electrode assemblies in the first electrode assembly group are connected to one pair of electrode terminals, the second direction being perpendicular to the first direction; and the second electrode assembly group includes a plurality of electrode assemblies arranged along the second direction, and the plurality of electrode assemblies in the second electrode assembly group are connected to one pair of electrode terminals.

Compared with accommodating a plurality of electrode assemblies in different housings respectively, accommodating a plurality of electrode assemblies in the housing of the battery cell can reduce the space occupied by the housing and improve the energy density of the battery cell. In addition, with a plurality of electrode assemblies in a same electrode assembly group connected to a same pair of electrode terminals, the maximum electrical energy that the battery cell can provide can be increased, helping to meet a demand of users for large-capacity batteries.

In some embodiments, the housing includes a housing body with openings at two ends along the first direction and two first walls, the two first walls are respectively disposed at the two ends of the housing body along the first direction and configured to cover the housing body, the first wall is perpendicular to the first direction, and electrode terminals of the first electrode assembly group and electrode terminals of the second electrode assembly group are respectively disposed on the two first walls.

The housing body with openings at the two ends along the first direction can provide convenience in placing the two electrode assembly groups into the housing body from the two ends of the housing body, which can improve production efficiency. In addition, respectively disposing the electrode terminals on the two first walls at the two ends along the first direction can allow the two electrode assembly groups to work independently without interfering with each other. Even if one group of electrode assemblies has an abnormality, the normal operation of the other group of electrode assemblies can be ensured.

In some embodiments, the electrode assembly includes tabs, and the tabs are disposed at an end of the electrode assembly in the first direction and are connected to the electrode terminals on the first wall.

In a same electrode assembly group, tabs and electrode terminals of electrode assemblies are arranged at the same end in the first direction, which is conducive to the connection between the tabs and the electrode terminals, so that the electrical energy generated by the electrode assemblies can be led out through the electrode terminals to provide it to the electric device.

In some embodiments, the first wall is provided with a pressure relief mechanism.

Disposing the pressure relief mechanism on the first wall can quickly release the internal pressure when the internal pressure or temperature of the battery cell reaches a threshold, ensuring the safety of the battery cell.

In some embodiments, the electrode assembly includes tabs, and the tabs are disposed at two ends of the electrode assembly in a third direction and are connected to the electrode terminals on the first wall, the third direction being perpendicular to the first direction.

For the battery cell structure whose tabs are disposed at two ends of the electrode assembly in the third direction, the energy density can also be improved by arranging the electrode assemblies along the first direction and connecting them to the electrode terminals at two ends in the first direction.

In some embodiments, the housing body includes second walls, the second wall is perpendicular to the third direction, and the second wall is provided with a pressure relief mechanism.

For the battery cell structure whose tabs are disposed at two ends of the electrode assembly in the third direction, disposing the pressure relief mechanism on the second wall is more conducive to the discharge of high-temperature and high-pressure substances inside the battery cell, ensuring the safety of the battery cell.

In some embodiments, surfaces of the first electrode assembly group and the second electrode assembly group that are in contact with each other are insulated.

This can ensure that the first electrode assembly group and the second electrode assembly group work independently without interference, reducing the risk of a short circuit in the battery cell, thereby ensuring the safety performance of the battery cell.

In some embodiments, a first insulating member is disposed between the first electrode assembly group and the second electrode assembly group.

The first insulating member can insulate the first electrode assembly group from the second electrode assembly group. Even if the battery cell is subjected to external impact, the first insulating member can ensure the insulation performance between the two, reducing the risk of a short circuit in the battery cell, thereby ensuring the safety performance of the battery cell.

In some embodiments, the first insulating member is provided with a through hole, and the through hole is configured to communicate an accommodation space of the first electrode assembly group with an accommodation space of the second electrode assembly group.

The through hole on the first insulating member helps the electrolyte to flow between the accommodation space of the first electrode assembly group and the accommodation space of the second electrode assembly group, ensuring that the first electrode assembly group and the second electrode assembly group are equally infiltrated by the electrolyte, thereby improving the stability of the battery cell in providing electrical energy.

In some embodiments, a second insulating member is disposed between the first electrode assembly group and the housing, and the second insulating member covers at least part of the first electrode assembly group; and a third insulating member is disposed between the second electrode assembly group and the housing, and the third insulating member covers at least part of the second electrode assembly group.

The disposition of the second insulating member and the third insulating member can improve the insulation performance between the first electrode assembly group and the second electrode assembly group and the housing, avoiding safety hazards caused by electric leakage of the metal housing and ensuring the safety performance of the battery.

In some embodiments, the second insulating member and the third insulating member are connected to the first insulating member.

This can further strengthen the insulation treatment at the edges of the electrode assembly groups, avoiding a short circuit caused by contact between the edges of the first electrode assembly group and the second electrode assembly group. Especially when the battery cell is subjected to external impact, the second insulating member and the third insulating member connected to the first insulating member can reduce the shaking of the first insulating member, reducing the risk of failure of the first insulating member, thereby improving the safety of the battery cell.

In some embodiments, a ratio of size of the battery cell in the first direction to size in the third direction is greater than or equal to 2, the third direction being perpendicular to the first direction.

This design can maximize the capacity of the battery cell while improving the energy density of the battery cell.

According to a second aspect, a battery module is provided, including the battery cell according to any one of the foregoing embodiments.

According to a third aspect, a battery is provided, including the battery module according to any one of the foregoing embodiments.

According to a fourth aspect, an electric apparatus is provided, including the battery according to any one of the foregoing embodiments, where the battery is configured to supply electrical energy to the electric apparatus.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic structural diagram of a vehicle according to an embodiment of this application.
FIG. 2 is a schematic exploded view of a structure of a battery according to an embodiment of this application.
FIG. 3 is a schematic structural diagram of some battery cells according to an embodiment of this application.
FIG. 4 is a schematic exploded view of a structure of a battery cell according to an embodiment of this application.
FIG. 5 is a schematic diagram of the battery cell in a first direction shown in FIG. 3.
FIG. 6 is a cross-sectional view of the battery cell shown in FIG. 5 along direction A-A.
FIG. 7 is a schematic exploded view of a structure of another battery cell according to an embodiment of this application.
FIG. 8 is a schematic exploded view of a structure of another battery cell according to an embodiment of this application.
FIG. 9 is a schematic exploded view of a structure of another battery cell according to an embodiment of this application.
FIG. 10 is a schematic exploded view of a structure of another battery cell according to an embodiment of this application.
FIG. 11 is a schematic cross-sectional view of the battery cell shown in FIG. 10.
FIG. 12 is a schematic cross-sectional view of another battery cell according to an embodiment of this application.
FIG. 13 is an overall schematic structural diagram of another battery cell according to an embodiment of this application.
FIG. 14 is a schematic exploded view of a structure of another battery cell according to an embodiment of this application.
FIG. 15 is an overall schematic structural diagram of another battery cell according to an embodiment of this application.
FIG. 16 is a schematic exploded view of a structure of another battery cell according to an embodiment of this application.
FIG. 17 is a schematic exploded view of a structure of another battery cell according to an embodiment of this application.
FIG. 18 is a schematic structural diagram of an insulating member according to an embodiment of this application.
FIG. 19 is a schematic structural diagram of a battery module according to an embodiment of this application.

In the accompanying drawings, the figures are not necessarily drawn to scale.

### DESCRIPTION OF EMBODIMENTS

The following further describes implementations of this application in detail with reference to the accompanying drawings and embodiments. The detailed description of the embodiments and the accompanying drawings are intended to illustrate the principle of this application, rather than to limit the scope of this application, meaning this application is not limited to the embodiments described herein.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not strictly parallel, but within the allowable range of error.

The orientation terms appearing in the following description all are directions shown in the figures, and do not limit the specific structure of this application. In the descriptions of this application, it should be further noted that unless otherwise specified and defined explicitly, the terms "mount", "connect", and "join" should be understood in their general senses. For example, they may refer to a fixed connection, a detachable connection, or an integrated connection, and they may refer to a direct connection or an indirect connection through an intermediate medium. Persons of ordinary skill in the art can understand specific meanings of these terms in this application as appropriate to specific situations.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described in this application may be combined with other embodiments.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In this application, "a plurality of" means more than two (inclusive). Similarly, "a plurality of groups" means more than two (inclusive) groups, and "a plurality of pieces" means more than two (inclusive) pieces.

In the embodiments of this application, like reference signs denote like components, and for brevity, in different embodiments, detailed descriptions of like components are not repeated. It should be understood that, as shown in the accompanying drawings, sizes such as thickness, length, and width of various members and sizes such as thickness, length, and width of integrated devices in the embodiments of this application are merely for illustrative purposes and should not constitute any limitations on this application.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes. This is not limited in the embodiments of this application either. Battery cells are typically divided into three types by packaging method: cylindrical cell, prismatic cell, and pouch cell. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative tab. The negative electrode current collector may be made of copper, and the negative electrode active substance may be carbon, silicon, or the like. To allow a high current to pass through without any fusing, a plurality of positive tabs are provided and stacked together, and a plurality of negative tabs are provided and stacked together. The separator may be made of polypropylene (polypropylene, PP), polyethylene (polyethylene, PE), or the like. In addition, the electrode assembly may be a wound structure or a stacked structure. However, the embodiments of this application are not limited thereto.

To meet different power requirements, the battery may include a plurality of battery cells, and the plurality of battery cells may be connected in series, parallel, or series-parallel, where being connected in series-parallel means a combination of series and parallel connections. Optionally, a plurality of battery cells may be connected in series, parallel, or series-parallel to form a battery module first, and then a plurality of battery modules are connected in series, parallel, or series-parallel to form a battery. In other words, the plurality of battery cells may be directly combined into a battery, or may first be combined into battery modules that are then combined into a battery. The battery is further provided in an electric device to supply electrical energy to the electric device.

With the development of battery technology, the demand for battery capacity in electric devices is increasing. To meet this demand, under the condition that the capacity of a battery cell is fixed, as many battery cells as possible are usually combined to form a battery to increase the battery capacity. However, more battery cells included in a battery box means more space occupied by a housing body of the battery cell in the battery box, and more structures used to fix the battery cells inside the box, resulting in a lower energy density of the battery. In addition, more battery cells included in a battery means a larger size of a battery box, and more difficult to match space reserved for the battery in an electric device.

In view of this, this application provides a battery cell. A housing of the battery cell accommodates a first electrode assembly group and a second electrode assembly group arranged along a first direction, and electrode terminals of each electrode assembly group are respectively disposed at two ends in that direction, so that the first electrode assembly group and the second electrode assembly group can work independently. As compared with the first electrode assembly group and the second electrode assembly group being separately accommodated in a housing and arranged along the first direction, the battery cell provided in this embodiment of this application can at least reduce the space occupied by the housing at the bottom of the battery cell and improve the energy density of the battery cell. In addition, considering that the battery may include a plurality of battery cells, when the battery cell provided in this embodiment of this application is used to form a battery, fewer battery cells can be used to provide the same energy. This can also reduce structures in the battery box used to fix the battery cells, thereby further improving the energy density of the battery.

The technical solutions described in the embodiments of this application are all applicable to a variety of electric devices using a battery. The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as an example for the description of the following embodiments.

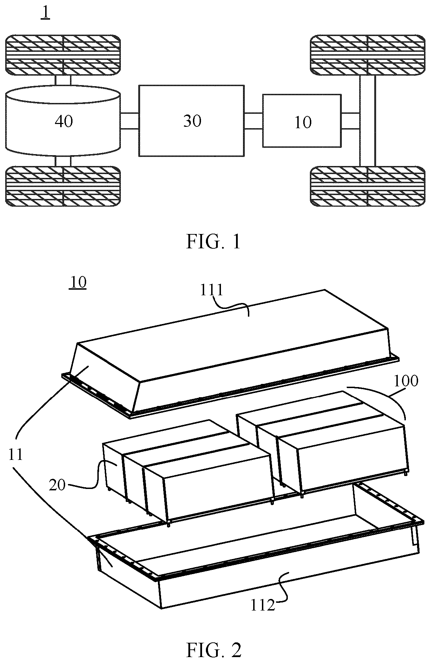

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided inside the vehicle 1, where the controller 30 is configured to control the battery 10 to supply power to the motor 40. For example, the battery 10 may be provided at the bottom, front, or rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs of start, navigation, and running of the vehicle 1. In another embodiment of this application, the battery 10 can be used as not only the operational power source for the vehicle 1, but also as a driving power source for the vehicle 1, replacing or partially replacing fossil fuel or natural gas to provide driving traction for the vehicle 1.

To meet different power usage requirements, the battery may include a plurality of battery cells, and the plurality of battery cells may be connected in series, parallel, or series-parallel, where being connected in series-parallel means a combination of series and parallel connections. The battery may also be referred to as a battery pack. Optionally, a plurality of battery cells may be connected in series, parallel, or series-parallel to form a battery module first, and then a plurality of battery modules are connected in series, parallel, or series-parallel to form a battery. In other words, the plurality of battery cells may be directly combined into a battery, or may first be combined into battery modules that are then combined into a battery.

For example, FIG. 2 is a schematic structural diagram of a battery 10 according to an embodiment of this application. The battery 10 may include at least one battery module 100. The battery module 100 includes a plurality of battery cells 20. The battery 10 may further include a box 11. Inside of the box 11 is a hollow structure. The plurality of battery cells 20 are accommodated in the box 11. FIG. 2 shows a possible implementation of the box 11 in the embodiments of this application. As shown in FIG. 2, the box 11 may include two portions that are referred as a first box portion 111 and a second box portion 112, where the first box portion 111 and the second box portion 112 are snap-fitted. Shapes of the first box portion 111 and the second box portion 112 may be determined according to a shape of a combination of the battery module 100. At least one of the first box portion 111 and the second box portion 112 is provided with an opening. For example, as shown in FIG. 2, the first box portion 111 and the second box portion 112 each may be a hollow cuboid and have only one face with an opening, where an opening of the first box portion 111 and an opening of the second box portion 112 are opposite each other, and the first box portion 111 and the second box portion 112 are snap-fitted to form a box 11 having an enclosed chamber.

For another example, unlike FIG. 2, it is possible that only one of the first box portion 111 and the second box portion 112 is a hollow cuboid with an opening, and the other may be a plate for covering the opening. For example, an example is used where the second box portion 112 is a hollow cuboid and has only one face with an opening and the first box portion 111 is a plate. Therefore, the first box portion 111 covers the opening of the second box portion 112 to form a box 11 with an enclosed chamber. The chamber may be configured for accommodating the plurality of battery cells 20. The plurality of battery cells 20 are connected in parallel, in series, or in series-parallel, and then put into the box 11 formed after the first box portion 111 and the second box portion 112 are snap-fitted.

Optionally, the battery 10 may further include other structures. Details are not described herein again. For example, the battery 10 may further include a busbar that is used to implement electrical connection between the plurality of battery cells 20, for example, in a parallel, series, or series-parallel manner. Specifically, the busbar may implement the electrical connection between the battery cells 20 by connecting electrode terminals of the battery cells 20. Further, the busbar may be fixed to the electrode terminals of the battery cells 20 by welding. Electrical energy of the plurality of battery cells 20 may be further led out through a conductive mechanism that passes through the box 11.

Depending on different power needs, battery cells 20 in the battery module 100 may be provided in any quantity. The plurality of battery cells 20 may be connected in series, in parallel, or in series-parallel to achieve greater capacity or power. Because each battery 10 may include a large quantity of battery cells 20, for ease of installation, the battery cells 20 may be disposed by group, and each group of battery cells 20 forms a battery module 100. The quantity of battery cells 20 included in the battery module 100 is not limited, and may be set as required.

The battery 10 may include a plurality of battery modules 100. These battery modules 100 may be connected in series, parallel, or series-parallel.

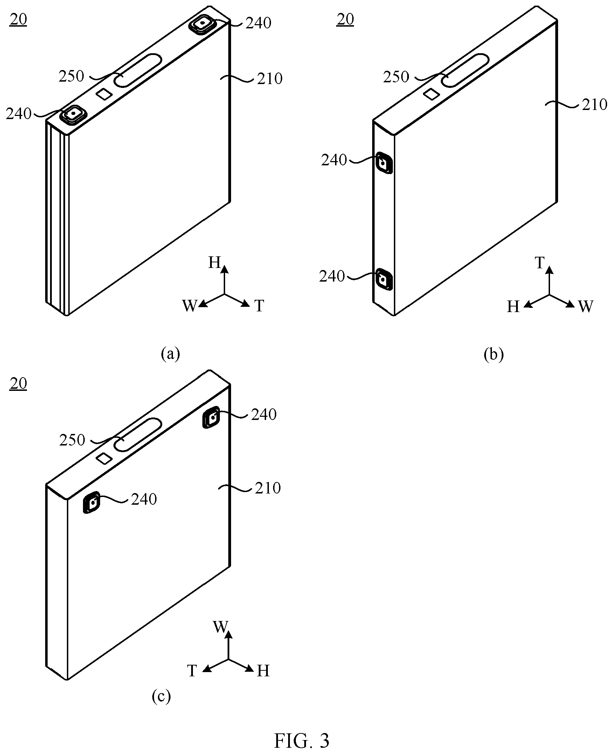

FIGs. 3 to 6 are schematic structural diagrams of battery cells 20 provided in this application. The battery cell 20 includes a housing 210, a first electrode assembly group 220, and a second electrode assembly group 230. The first electrode assembly group 220 and the second electrode assembly group 230 are accommodated within the housing 210, with the first electrode assembly group 220 and the second electrode assembly group 230 arranged along a first direction H. The first electrode assembly group 220 and the second electrode assembly group 230 each include at least one electrode assembly. Electrode terminals 240 of the first electrode assembly group 220 and electrode terminals 240 of the second electrode assembly group 230 are respectively located on two walls of the housing 210 that are disposed opposite along the first direction H.

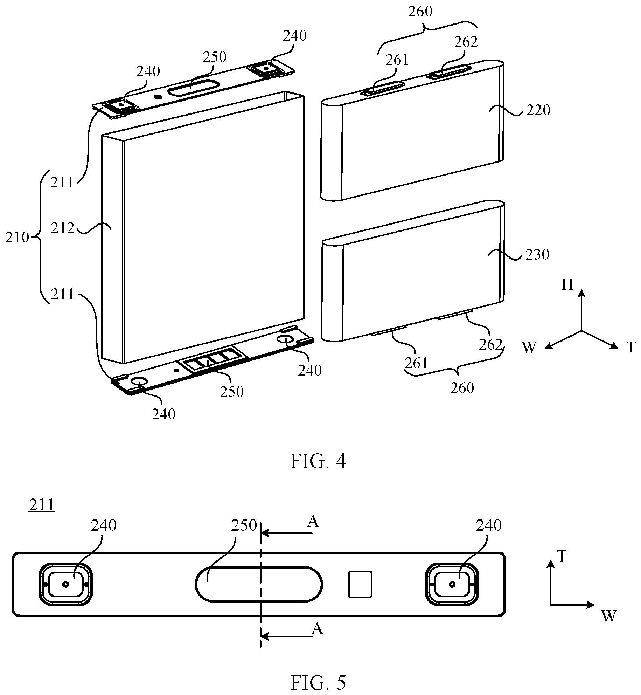

As shown in FIGs. 3 and 4, the housing 210 has a hollow structure configured to accommodate necessary components in the battery cell 20 for generating electrical energy, such as electrode assemblies 222 and electrolyte. Electrochemical reactions occurring in the battery cell 20 usually take place within the housing 210, and electrical energy generated inside the battery cell 20 is led out through the electrode terminals 240 provided on the housing 210. In addition, the housing 210 can also be provided with a pressure relief mechanism 250 to enhance the safety performance of the battery cell 20.

In the battery cell 20 provided in this application, the housing 210 accommodates the first electrode assembly group 220 and the second electrode assembly group 230. The first electrode assembly group 220 and the second electrode assembly group 230 are arranged along the first direction H, each including at least one electrode assembly. All electrode assemblies 222 with electrode terminals 240 facing towards one end of the first direction H form the first electrode assembly group 220, and all electrode assemblies 222 with electrode terminals 240 facing towards the other end of the first direction H form the second electrode assembly group 230. As can be seen from FIGs. 3 and 4, an arrangement direction of the first electrode assembly group 220 and the second electrode assembly group 230 is the same as a disposition direction of the electrode terminals 240 of the two electrode assembly groups on the housing 210. FIG. 3 shows several possible battery cells 20. For example, FIG. 3(a) shows a case that the first direction H is perpendicular to a wall of the housing 210 configured to close the housing body. The first electrode assembly group 220 and the second electrode assembly group 230 are arranged along the first direction H, and the electrode terminals 240 are disposed on two walls of the housing 210 of the battery cell 20 configured to close the housing body. For another example, FIG. 3(b) shows a case that the first direction H is perpendicular to side walls of the battery cell 20. The first electrode assembly group 220 and the second electrode assembly group 230 are arranged along the first direction H, and the electrode terminals 240 are disposed on the side walls. The side walls are perpendicular to the walls of the housing 210 configured to close the housing body. The first direction H can be a width direction of the battery cell 20 or a thickness direction of the battery cell 20. The side wall can be perpendicular to the width direction of the battery cell 20 or the thickness direction of the battery cell 20. When the side walls are walls perpendicular to the width direction of the battery cell 20, the electrode terminals 240 are disposed on two walls disposed opposite as shown in FIG. 3(b). When the side walls are perpendicular to the thickness direction of the battery cell 20, the side walls are walls with the largest area on the battery cell 20 and also referred to as large sides of the battery cell 20. As shown in FIG. 3(c), the first electrode assembly group 220 and the second electrode assembly group 230 are arranged along the first direction H, and the electrode terminals 240 can be disposed on the two large sides of the housing 210 of the battery cell 20 that are disposed opposite. That is to say, this embodiment of this application does not limit the first direction H. The first direction H can be any direction of the thickness direction, a length direction, and the width direction of the battery cell 20. This embodiment of this application takes the battery cell shown in FIG. 3(a) as only an example for description. It should be understood that the battery cells shown in FIGs. 3(b) and (c) are also applicable to the solution of this application.

In a possible embodiment, the first electrode assembly group 220 and the second electrode assembly group 230 may be two identical groups of electrode assemblies. The first electrode assembly group 220 is used as an example. At least one electrode assembly in the first electrode assembly group 220 may correspond to one pair of electrode terminals 240 or a plurality of pairs of electrode terminals 240. For example, when the first electrode assembly group 220 includes one electrode assembly, the electrode assembly may correspond to one pair of electrode terminals 240 with opposite polarities. When the first electrode assembly group 220 includes two electrode assemblies, the two electrode assemblies may correspond to one pair of electrode terminals 240 with opposite polarities, or may each correspond to one pair of electrode terminals 240 with opposite polarities. When the first electrode assembly group 220 includes more than two electrode assemblies 222, each electrode assembly in the first electrode assembly group 220 may correspond to one pair of electrode terminals 240 with opposite polarities. Alternatively, these electrode assemblies 222 may be divided into several subgroups, and each subgroup corresponds to one pair of electrode terminals 240 with opposite polarities. The number of electrode assemblies 222 included in each subgroup may be the same or different, or all electrode assemblies 222 may correspond to one pair of electrode terminals 240 with opposite polarities. In this embodiment, the second electrode assembly group 230 is the same as the first electrode assembly group 220. For example, when the first electrode assembly group 220 includes one electrode assembly, the second electrode assembly group 230 also includes one electrode assembly.

In another possible embodiment, the first electrode assembly group 220 and the second electrode assembly group 230 may be two different groups of electrode assemblies. In a case, the number of electrode assemblies 222 included in the first electrode assembly group 220 is the same as the number of electrode assemblies 222 included in the second electrode assembly group 230, and the number of electrode terminals 240 of the first electrode assembly group 220 is different from the number of electrode terminals 240 of the second electrode assembly group 230. In another case, the number of electrode assemblies 222 included in the first electrode assembly group 220 is different from the number of electrode assemblies 222 included in the second electrode assembly group 230, and the number of electrode terminals 240 of the first electrode assembly group 220 and the number of electrode terminals 240 of the second electrode assembly group 230 may be the same or different.

FIGs. 4 to 6 show only a case that the first electrode assembly group 220 and the second electrode assembly group 230 each include one electrode assembly, and each electrode assembly corresponds to one pair of electrode terminals 240. That is, the first electrode assembly group 220 and the second electrode assembly group 230 each correspond to one pair of electrode terminals 240.

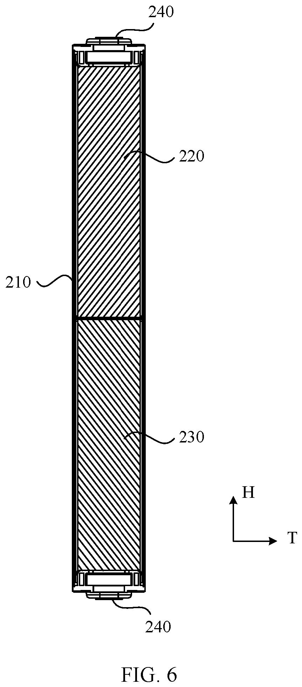

The electrode terminals 240 of the first electrode assembly group 220 and the electrode terminals 240 of the second electrode assembly group 230 are respectively located on two walls of the housing 210. As can be seen from FIGs. 4 to 6, the two walls disposed with the electrode terminals 240 can be perpendicular to the first direction H, that is, the walls of the housing 210 of the battery cell 20 that are disposed opposite along the first direction H. The first direction H can also be referred to as the height direction of the battery cell 20. As can be seen from FIG. 6, the first electrode assembly group 220 and the second electrode assembly group 230 are arranged along the first direction H in the same housing 210. No space between an end of the first electrode assembly group 220 away from the electrode terminals 240 of the first electrode assembly group 220 and an end of the second electrode assembly group 230 away from the electrode terminals 240 of the second electrode assembly group 230 is occupied by the housing 210. In addition, the electrode terminals 240 of the first electrode assembly group 220 and the electrode terminals 240 of the second electrode assembly group 230 are respectively located at two ends of the housing 210 along the first direction H. Electrical energy of the first electrode assembly group 220 is led out by the electrode terminals 240 of the first electrode assembly group 220, and electrical energy of the second electrode assembly group 230 is led out by the electrode terminals 240 of the second electrode assembly group 230, without no interference between the two.

Compared with the first electrode assembly group 220 and the second electrode assembly group 230 being separately accommodated in a housing and arranged along the first direction H, the battery cell 20 provided in this embodiment of this application can reduce the space occupied by the housing at the bottom of the battery cell and improve the energy density of the battery cell. In addition, considering that the battery may include a plurality of battery cells, when the battery cell 20 provided in this embodiment of this application is used to form a battery, fewer battery cells 20 can be used to provide the same energy. This can also reduce structures in the battery box used to fix the battery cells 20, thereby further improving the energy density of the battery. Under a same size design of battery module, compared with a battery module obtained using traditional battery cells, the battery module 100 obtained using battery cells 20 provided in this embodiment of this application can have a 7% increase in volume utilization rate and energy density.

In addition, the first electrode assembly group 220 and the second electrode assembly group 230 each correspond to one pair of electrode terminals 240, ensuring that the operation of a plurality of groups of electrode assemblies in the battery cell 20 does not affect each other, even if one group of electrode assemblies has an abnormality, the other group of electrode assemblies can still work normally. In addition, arranging the two groups of independently operating electrode assemblies in the first direction H can increase the size of the battery cell 20 in the first direction H, and avoid an increase in the internal resistance caused by only increasing the height of the electrode assemblies.

Furthermore, in this embodiment of this application, the size of the battery cell 20 can be designed according to space reserved for the battery by the electric device without affecting the performance of the battery cell 20, thereby maximizing the energy density of the battery cell 20, improving production efficiency, and reducing production costs.

According to some embodiments of this application, optionally, the first electrode assembly group 220 includes a plurality of first electrode assembly subgroups 221, the first electrode assembly subgroup 221 includes at least one electrode assembly, the plurality of first electrode assembly subgroups 221 are arranged in a row along a second direction T, and each first electrode assembly subgroup 221 is connected to one pair of electrode terminals 240, the second direction T being perpendicular to the first direction H; and the second electrode assembly group 230 includes a plurality of second electrode assembly subgroups 231, the second electrode assembly subgroup 231 includes at least one electrode assembly, the plurality of second electrode assembly subgroups 231 are arranged in a row along the second direction T, and each second electrode assembly subgroup 231 is connected to one pair of electrode terminals 240.

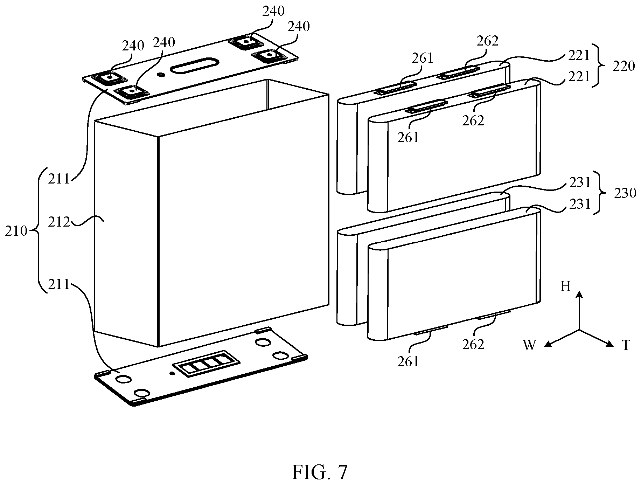

FIG. 7 is a schematic structural diagram of another battery cell 20 according to this application. The first electrode assembly group 220 and the second electrode assembly group 230 in the battery cell 20 each include a plurality of electrode assembly subgroups. The electrode assembly subgroup refers to a group of electrode assemblies 222 corresponding to a same pair of electrode terminals 240. Each electrode assembly subgroup may include at least one electrode assembly.

The first electrode assembly group 220 in FIG. 7 is used as an example. FIG. 7 shows a case that the first electrode assembly group 220 includes two first electrode assembly subgroups 221. The two first electrode assembly subgroups 221 are arranged in a row along a second direction T. Each first electrode assembly subgroup 221 corresponds to one pair of electrode terminals 240, and electrode terminals 240 of each first electrode assembly subgroup 221 are located on a same wall of the housing 210. Specifically, the electrode terminals 240 of the first electrode assembly group 220 are located on one wall of the housing 210 along the first direction H, and electrode terminals 240 of the first electrode assembly subgroups 221 are also located on that wall.

The first electrode assembly subgroup 221 shown in FIG. 7 includes only one electrode assembly. It can be understood that the first electrode assembly subgroup 221 may also include a plurality of electrode assemblies. In this case, the plurality of electrode assemblies correspond to a same pair of electrode terminals 240, that is, electrode terminals 240 connected to the first electrode assembly subgroup 221.

The second electrode assembly group 230 may also include a plurality of second electrode assembly subgroups 231 arranged in a row along the second direction T. The situation with the second electrode assembly subgroups 231 is similar to that with the first electrode assembly subgroups 221 and is not repeated herein.

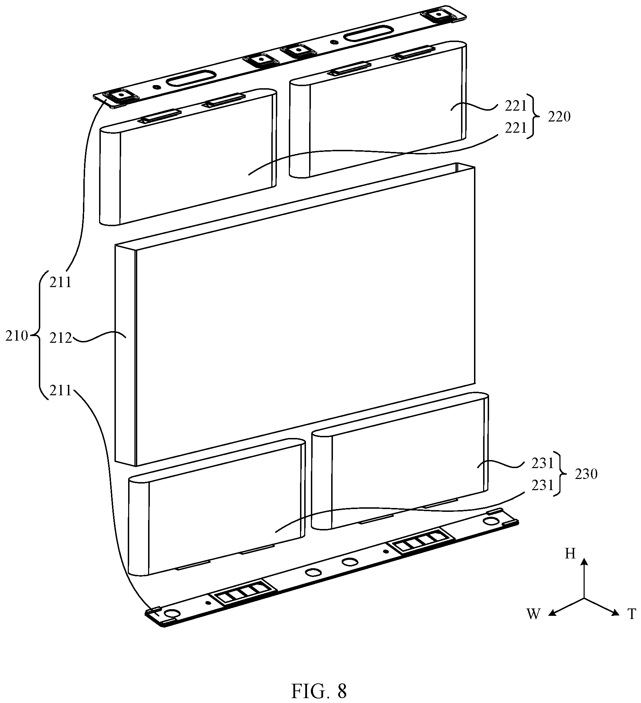

FIG. 8 is a schematic structural diagram of another battery cell 20. The first electrode assembly group 220 in FIG. 8 is used as an example. FIG. 8 shows a case that the first electrode assembly group 220 includes two first electrode assembly subgroups 221, and the two first electrode assembly subgroups 221 are arranged in a row along a third direction W. Each first electrode assembly subgroup 221 is connected to one pair of electrode terminals 240 and located on a same wall, that is, a wall on which the electrode terminals 240 of the first electrode assembly group 220 are located. Similarly, the second electrode assembly group 230 in FIG. 8 includes two second electrode assembly subgroups 231 arranged in a row along the third direction W. Each second electrode assembly subgroup 231 is connected to one pair of electrode terminals 240, which are located on the wall on which the electrode terminals 240 of the second electrode assembly group 230 are located.

With the plurality of electrode assembly subgroups disposed, a plurality of electrode assemblies can be accommodated in one housing 210. Compared with a battery cell whose electrode assemblies are accommodated in housings respectively, the battery cell 20 provided in this embodiment of this application can further reduce the space occupied by the housing and improve the energy density of the battery cell 20. When the battery cell 20 provided in this embodiment of this application is used to form a battery, further, fewer battery cells 20 can be used to provide the same energy, thereby reducing structures in the battery box used to fix the battery cells 20 and further improving the energy density of the battery.

According to some embodiments of this application, optionally, the first electrode assembly group 220 includes a plurality of first electrode assembly subgroups 221, the first electrode assembly subgroup 221 includes at least one electrode assembly, the plurality of first electrode assembly subgroups 221 are arranged into an array along a second direction T and a third direction W, and each first electrode assembly subgroup 221 is connected to one pair of electrode terminals 240, the first direction H, the second direction T, and the third direction W being perpendicular to each other; and the second electrode assembly group 230 includes a plurality of second electrode assembly subgroups 231, the second electrode assembly subgroup 231 includes at least one electrode assembly, the plurality of second electrode assembly subgroups 231 are arranged into an array along the second direction T and the third direction W, and each second electrode assembly subgroup 231 is connected to one pair of electrode terminals 240.

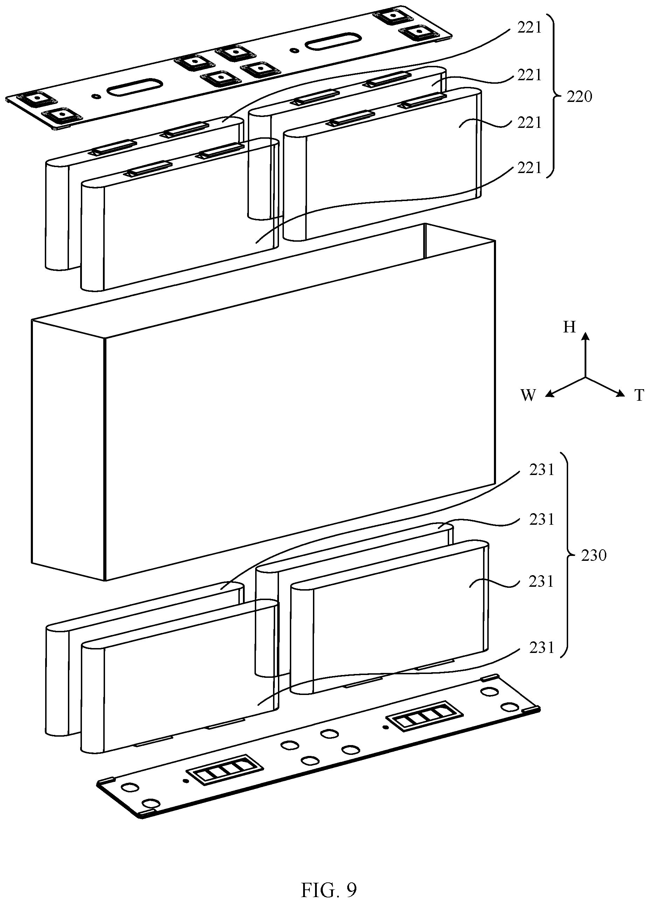

FIG. 9 shows a structure of another battery cell 20 according to an embodiment of this application. The first electrode assembly group 220 in FIG. 9 is used as an example. The first electrode assembly subgroups 221 in the first electrode assembly group 220 are arranged into an array along the second direction T and the third direction W. For example, the first electrode assembly subgroups 221 may be arranged into a 2×2 array. Each first electrode assembly subgroup 221 corresponds to one pair of electrode terminals 240, both of which are located on a wall on which the electrode terminals 240 of the first electrode assembly group 220 are located.

FIG. 9 shows only a case that the first electrode assembly subgroup 221 includes one electrode assembly. In a possible embodiment, the first electrode assembly subgroups 221 may alternatively include a plurality of electrode assemblies. The plurality of electrode assemblies correspond to a same pair of electrode terminals 240, that is, electrode terminals 240 connected to the first electrode assembly subgroup 221.

The second electrode assembly group 230 may also include a plurality of second electrode assembly subgroups 231 arranged into an array along the second direction T and the third direction W. The situation with the second electrode assembly subgroups 231 is similar to that with the first electrode assembly subgroups 221 and is not repeated herein.

Disposing a plurality of electrode assembly subgroups in the second direction T and the third direction W can further reduce the space occupied by the housing 210 in a plurality of directions and improve the energy density of the battery cell 20. When the battery cell 20 provided in this embodiment of this application is used to form a battery, further, fewer battery cells 20 can be used to provide the same energy, thereby reducing structures in the battery box used to fix the battery cells 20 and further improving the energy density of the battery.

According to some embodiments of this application, optionally, the first electrode assembly group 220 includes a plurality of electrode assemblies 222 arranged along a second direction T, and the plurality of electrode assemblies 222 in the first electrode assembly group 220 are connected to one pair of electrode terminals 240, the second direction T being perpendicular to the first direction H; and the second electrode assembly group 230 includes a plurality of electrode assemblies 222 arranged along the second direction T, and the plurality of electrode assemblies 222 in the second electrode assembly group 230 are connected to one pair of electrode terminals 240.

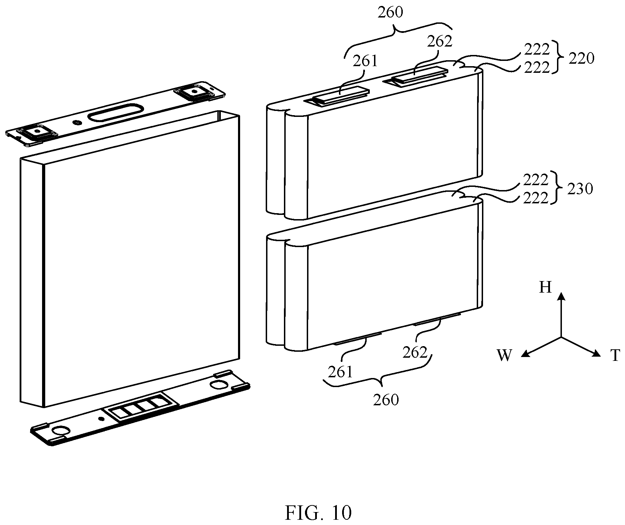

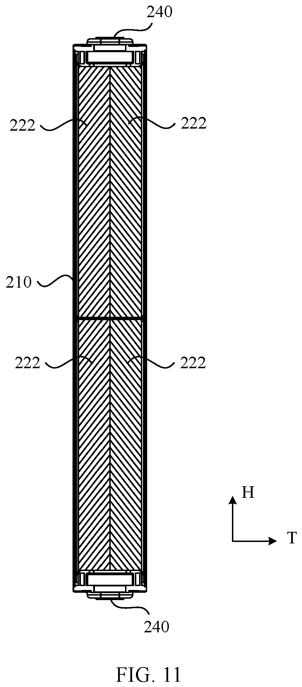

FIGs. 10 and 11 show a structure of another battery cell 20 according to an embodiment of this application. The first electrode assembly group 220 includes a plurality of electrode assemblies 222, and all the electrode assemblies 222 are connected to a same pair of electrode terminals 240, that is, the electrode terminals 240 of the first electrode assembly group 220. In a possible embodiment, the electrode terminals 240 of the first electrode assembly group 220 are arranged along the second direction T. Similarly, the second electrode assembly group 230 may also include a plurality of electrode assemblies 222, and the electrode assemblies 222 are connected to the electrode terminals 240 of the second electrode assembly group 230.

FIG. 10 shows a structure of the battery cell 20 that the first electrode assembly group 220 and the second electrode assembly group 230 each include two electrode assemblies 222. A schematic cross-sectional view of the battery cell 20 shown in FIG. 10 in a plane formed by the first direction H and the second direction T is shown in FIG. 11. In actual production, the plurality of electrode assemblies 222 arranged along the second direction T can be bundled together as an electrode assembly group, and then the electrode assembly group is placed into the housing 210. This can ensure that the electrode assemblies 222 in the electrode assembly group are at a proper position within the housing 210.

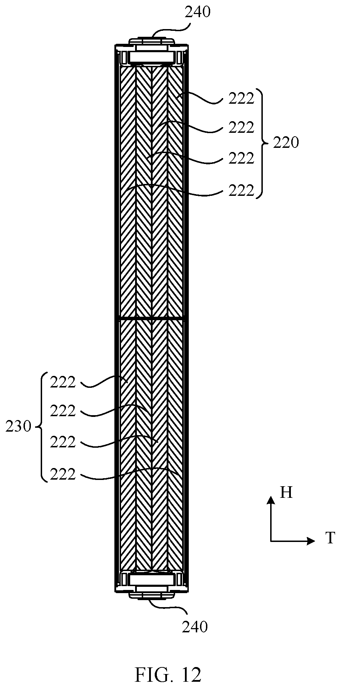

It can be understood that to improve energy density, the first electrode assembly group 220 and the second electrode assembly group 230 can include as many electrode assemblies 222 as possible. Considering a load-bearing capacity of the housing 210 of the battery cell 20, it is a more preferred embodiment that the first electrode assembly group 220 and the second electrode assembly group 230 each include four electrode assemblies 222. As shown in FIG. 12, the four electrode assemblies 222 of the first electrode assembly group 220 can be arranged along the second direction T and connected to a same pair of electrode terminals 240, that is, the electrode terminals 240 of the first electrode assembly group 220. The four electrode assemblies 222 of the second electrode assembly group 230 can be arranged along the second direction T and connected to a same pair of electrode terminals 240, that is, the electrode terminals 240 of the second electrode assembly group 230.

In actual production, the plurality of electrode assemblies 222 arranged along the second direction T can be bundled together as an electrode assembly group, and then the electrode assembly group is placed into the housing 210. In this way, assembly is not prone to defects, ensuring that the electrode assemblies 222 in the electrode assembly group are at a proper position within the housing 210, thereby improving production efficiency.

In a possible embodiment, the plurality of electrode assemblies 222 may be arranged along the third direction W, and a plurality of electrode assemblies 222 in a same electrode assembly group are still connected to a same pair of electrode terminals 240.

Compared with accommodating a plurality of electrode assemblies 222 in different housings 210 respectively, accommodating a plurality of electrode assemblies 222 in the housing 210 of the battery cell 20 can reduce the space occupied by the housing 210 and improve the energy density of the battery cell 20. In addition, with a plurality of electrode assemblies 222 in a same electrode assembly group connected to a same pair of electrode terminals 240, the maximum electrical energy that the battery cell 20 can provide can be increased, helping to meet a demand of users for large-capacity batteries.

According to some embodiments of this application, optionally, the housing 210 includes a housing body 212 with openings at two ends along the first direction H and two first walls 211, the two first walls 211 are respectively disposed at the two ends of the housing body 212 along the first direction H and configured to cover the housing body 212, the first wall 211 is perpendicular to the first direction H, and an electrode terminal 240 of the first electrode assembly group 220 and an electrode terminal 240 of the second electrode assembly group 230 are respectively disposed on the two first walls 211.

In the battery cell 20 provided in the above embodiment, the first electrode assembly group 220 and the second electrode assembly group 230 are arranged along the first direction H. The electrode terminals 240 of the first electrode assembly group 220 and the electrode terminals 240 of the second electrode assembly group 230 are respectively located on the two walls of the housing 210 that are disposed opposite along the first direction H. Therefore, the housing 210 can be designed to the structure that includes the housing body 212 and the two first walls 211.

The housing body 212 is a component configured to accommodate the electrode assemblies 222. In the battery cell 20 provided in this embodiment of this application, the housing body 212 is also a hollow structure with openings at two ends. The housing body 212 may be made of various materials, such as copper, iron, aluminum, steel, and aluminum alloy. During production, the housing body 212 has openings at two ends along the first direction H, so the first electrode assembly group 220 and the second electrode assembly group 230 can be placed into the housing body 212 from the openings at two ends of the housing body 212.

The first wall 211 is a component that covers the opening of the housing body 212 to isolate an internal environment of the battery cell 20 from an external environment. The first wall 211 may match the housing body 212 in shape. As shown in FIG. 3 to FIG. 12, the housing body 212 is a cuboid structure. The first wall 211 is a rectangular plate structure that matches the housing body 212. The first wall 211 may also be made of various materials, such as copper, iron, aluminum, steel, and aluminum alloy. The first wall 211 and the housing body 212 may be made of same or different materials.

The two first walls 211 are respectively disposed at two ends of the housing body 212 along the first direction H. In a possible embodiment, the two first walls 211 can be perpendicular to the first direction H, that is to say, they can be arranged in parallel. The two first walls 211 respectively cover openings at two ends of the housing body 212, so that the housing 210 of the battery cell 20 forms a closed structure. The housing body 212 can be filled with an electrolytic salt, such as an electrolyte. In addition, the electrode terminals 240 of the first electrode assembly group 220 and the electrode terminals 240 of the second electrode assembly group 230 are respectively arranged on the two first walls 211, so that electrical energy of the first electrode assembly group 220 and the second electrode assembly group 230 can be led out respectively from two ends of the first direction H, thereby implementing independent operation of the two electrode assembly groups.

In actual production, the first electrode assembly group 220 or the second electrode assembly group 230 can be connected to the electrode terminals 240 on the first wall 211 through a connecting member. The electrode assembly groups are separately placed into the housing body 212 from the openings at two ends of the housing body 212, and then the first wall 211 covers the openings of the housing body 212 through welding or other manners.

The housing body 212 with openings at the two ends along the first direction H can provide convenience in placing the two electrode assembly groups into the housing body 212 from the two ends of the housing body 212, which can improve production efficiency. In addition, respectively disposing the electrode terminals 240 on the two first walls 211 at the two ends along the first direction H can allow the two electrode assembly groups to work independently without interfering with each other. Even if one group of electrode assemblies has an abnormality, the normal operation of the other group of electrode assemblies can be ensured.

According to some embodiments of this application, optionally, the electrode assemblies 222 include tabs 260, the tabs 260 are disposed at an end of the electrode assemblies 222 in the first direction H, and connected to the electrode terminal 240 on the first wall 211.

The electrode assembly 222 is a component in which electrochemical reactions occur in the battery cell 20 and includes tabs 260. Specifically, the electrode assemblies 222 can have a first tab 261 and a second tab 262. The first tab 261 and the second tab 262 have opposite polarities. For example, when the first tab 261 is a positive tab 260, the second tab 262 is a negative tab 260. The positive tab 260 may be formed by stacking a portion of a positive electrode plate uncoated with a positive electrode active material layer, and the negative tab 260 may be formed by stacking a portion of a negative electrode plate uncoated with a negative electrode active material layer. The first tab 261 of the one or more electrode assemblies 222 is connected to one electrode terminal 240 through one connection member, and the second tab 262 of the one or more electrode assemblies 222 is connected to the other electrode terminal 240 through the other connection member. For example, the positive tab 260 is connected to the positive electrode terminal 240 through a connecting component, and the negative tab 260 is connected to the negative electrode terminal 240 through another connecting component. In FIGs. 3 to 12, the positional relationship between the first tab 261 and the second tab 262 is only an example. The positions of the first tab 261 and the second tab 262 of different electrode assemblies 222 or different electrode assembly subgroups can be set depending on actual needs.

In a structure of the battery cell 20, the first electrode assembly group 220 and the second electrode assembly group 230 are arranged along the first direction H. The tabs 260 of the first electrode assembly group 220 can face towards one end of the first direction H, and the tabs 260 of the second electrode assembly group 230 can face towards the other end of the first direction H.

In a case that the first electrode assembly group 220 includes at least one electrode assembly 222, the electrode assembly 222 in the first electrode assembly group 220 corresponds to one pair of tabs 260, and this pair of tabs 260 is connected to one pair of electrode terminals 240. In a case that the first electrode assembly group 220 includes a plurality of first electrode assembly subgroups 221, each first electrode assembly subgroup 221 includes at least one electrode assembly 222. The electrode assembly 222 in each first electrode assembly subgroup 221 corresponds to one pair of tabs 260, and this pair of tabs 260 is connected to one pair of electrode terminals 240. The situation with the second electrode assembly group 230 is similar to that with the first electrode assembly group 220 and will not be repeated herein.

In a same electrode assembly group, tabs 260 and electrode terminals 240 of electrode assemblies 222 are arranged at the same end in the first direction H, which is conducive to the connection between the tabs 260 and the electrode terminals 240, so that the electrical energy generated by the electrode assemblies 222 can be led out through the electrode terminals 240 to provide it to the electric device.

According to some embodiments of this application, optionally, the first wall 211 is provided with a pressure relief mechanism 250.

The pressure relief mechanism 250 is a component or part that is actuated when the internal pressure or temperature of the battery cell 20 reaches a predetermined threshold, so as to relieve the internal pressure. The predetermined threshold can be adjusted according to different design requirements, depending on one or more materials of the positive electrode plate, negative electrode plate, electrolyte, and separator of the battery cell 20. The pressure relief mechanism 250 may employ an element or a part sensitive to pressure or temperature such that the pressure relief mechanism 250 is actuated when the internal pressure of the battery cell 20 reaches a predetermined threshold, thereby forming a channel for relieving the internal pressure or temperature. "Actuated" means that the pressure relief mechanism 250 is put into action such that the internal pressure and temperature of the battery cell 20 are relieved. The action that the pressure relief mechanism 250 is put into may include but is not limited to, for example, cracking, tearing, or melting at least part of the pressure relief mechanism 250. When the pressure relief mechanism 250 is actuated, high-temperature and high-pressure substances inside the battery cell 20 are discharged from the pressure relief mechanism 250 as emissions. In this way, the battery cell 20 can release its pressure under a condition of controllable pressure or temperature, thereby avoiding more serious potential accidents.

In a structure of a battery cell 20 provided in an embodiment of this application, the tabs 260 are disposed at an end of the electrode assembly 222 in the first direction H and are connected to the electrode terminals 240 on the first wall 211. The pressure relief mechanism 250 can be disposed on the same first wall 211. When thermal runaway occurs inside the battery cell 20, causing a sudden increase in pressure or temperature, high-temperature and high-pressure substances inside the battery cell 20 are more likely to overflow from between the electrode plates and the separator of the electrode assembly 222. Therefore, disposing the pressure relief mechanism 250 in a direction in which the high-temperature and high-pressure substances are more likely to overflow can quickly release the internal pressure and temperature of the battery cell 20.

This embodiment of this application does not limit the number and position of the pressure relief mechanism 250 on the first wall 211. For example, a plurality of pressure relief mechanisms 250 can be disposed on the first wall 211 depending on actual needs. For another example, the pressure relief mechanism 250 can be disposed in the middle of the first wall 211 or other positions on the first wall 211 depending on actual needs.

Disposing the pressure relief mechanism 250 on the first wall 211 can quickly release the internal pressure when the internal pressure or temperature of the battery cell 20 reaches a threshold, ensuring the safety of the battery cell 20.

According to some embodiments of this application, optionally, the electrode assemblies 222 include tabs 260, and the tabs 260 are disposed at two ends of the electrode assembly 222 in the third direction W, and are connected to the electrode terminals 240 on the first wall 211. The third direction W is perpendicular to the first direction H.

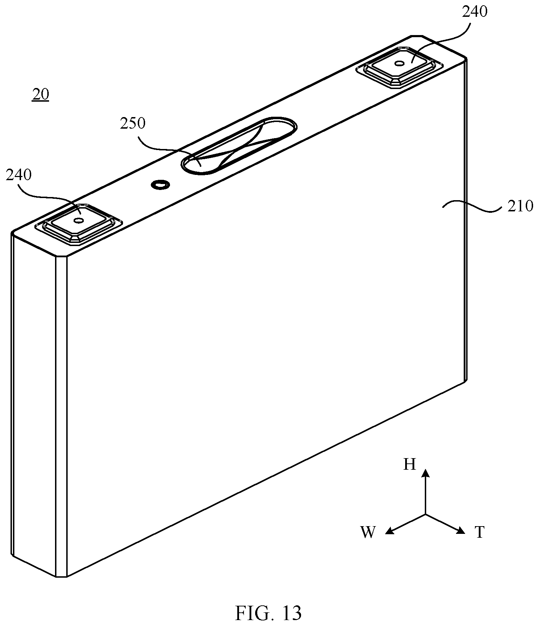

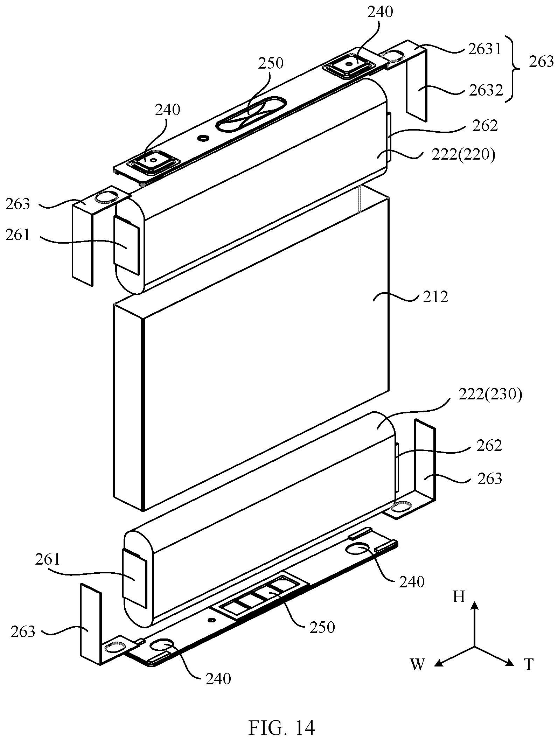

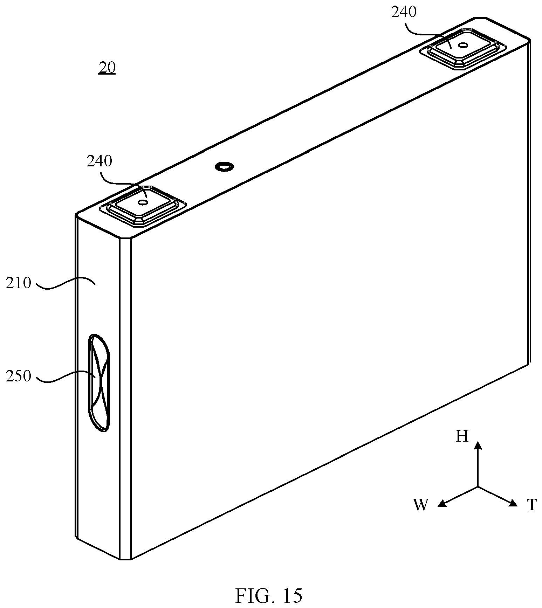

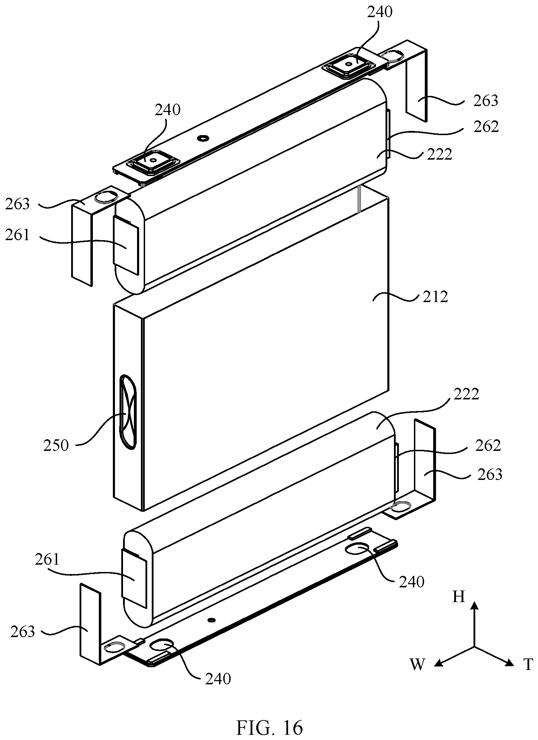

FIGs. 13 to 16 provide structures of two other battery cells 20. FIG. 13 is an overall schematic structural diagram of one of the battery cells 20, and FIG. 14 is a schematic exploded view of a structure of the battery cell 20 shown in FIG. 13; FIG. 15 is an overall schematic structural diagram of the other of the battery cells 20, and FIG. 16 is a schematic exploded view of a structure of the battery cell 20 shown in FIG. 15.

In the battery cells 20 shown in FIGs. 13 to 16, the tabs 260 are disposed at two ends of the electrode assembly 222 along the third direction W, and polarities of the tabs 260 at the two ends can be opposite. The first electrode assembly group 220 is used as an example. FIG. 14 shows a case that the first electrode assembly group 220 includes one electrode assembly 222. The first tab 261 of the electrode assembly 222 is located at one end of the electrode assembly 222 in the third direction W, and the second tab 262 is located at the other end of the electrode assembly 222 in the third direction W. The first tab 261 and the second tab 262 have opposite polarities. In the structure of the battery cell 20 shown in FIG. 14, the electrode terminals 240 of the first electrode assembly group 220 are still disposed on the first wall 211, that is, at one end in the first direction H. In a possible embodiment, the tabs 260 in the third direction W can be connected to the electrode terminals 240 in the first direction H through connecting members 263 in a bent form. Specifically, the connecting members 263 can include a first member 2631 and a second member 2632 connected to each other. The first member 2631 is perpendicular to the first direction H and configured to connect to the electrode terminal 240. The second member 2632 is perpendicular to the second direction T and configured to connect to the tab 260.

In the battery cell structures shown in FIGs. 13 to 16, the first electrode assembly group 220 may alternatively include a plurality of first electrode assembly subgroups, and each first electrode assembly subgroup includes at least one electrode assembly 222. The plurality of first electrode assembly subgroups are arranged in a row along the second direction T or the third direction W, or arranged into an array along the second direction T and the third direction W. Each first electrode assembly subgroup is connected to one pair of electrode terminals 240. Optionally, the first electrode assembly group 220 may alternatively include a plurality of electrode assemblies 222 arranged along the second direction T. The plurality of electrode assemblies 222 in the first electrode assembly group 220 are connected to one pair of electrode terminals 240. Similarly, the second electrode assembly group 230 may have the same structure as the first electrode assembly group 220.

For the structure of the battery cell 20 that the tabs 260 are disposed at two ends of the electrode assembly 222 in the third direction W, the energy density can alternatively be improved by arranging the electrode assemblies 222 along the first direction H and connecting them to the electrode terminals 240 at two ends of the first direction H.

According to some embodiments of this application, optionally, the housing body 212 includes second walls, and the second walls are perpendicular to the third direction W. The second wall is provided with a pressure relief mechanism 250.

In a possible structure of the battery cell 20 structure, as the battery cells 20 shown in FIGs. 13 and 14, a pressure relief mechanism 250 can be disposed on the first wall 211. In another possible structure of the battery cell 20, as the battery cells 20 shown in FIGs. 15 and 16, considering that the tabs 260 are disposed at two ends of the electrode assembly 222 along the third direction W, when thermal runaway occurs inside the battery cell 20, high-temperature and high-pressure substances inside the battery cell 20 are more likely to overflow from between the electrode plates and the separator in the electrode assemblies 222, that is, more likely to overflow along the third direction W. Therefore, the pressure relief mechanism 250 can be disposed on the second wall of the housing body 212 that is perpendicular to the third direction W.

This embodiment of this application does not limit the number and position of the pressure relief mechanism 250 on the second wall. The pressure relief mechanism 250 can be disposed on one second wall of the housing body 212, or on two second walls of the housing body 212 that are disposed opposite. One pressure relief mechanism 250 or a plurality of pressure relief mechanisms 250 can be disposed on one of the second walls. The pressure relief mechanism 250 can be disposed at the middle of one of the second walls or at other positions of the second wall.

For the structure of the battery cell 20 that the tabs 260 are disposed at two ends of the electrode assembly 222 in the third direction W, disposing the pressure relief mechanism 250 on the second wall is more conducive to the discharge of high-temperature and high-pressure substances inside the battery cell 20, ensuring the safety of the battery cell 20.

According to some embodiments of this application, optionally, surfaces of the first electrode assembly group 220 and the second electrode assembly group 230 that are in contact with each other are insulated.

The first electrode assembly group 220 and the second electrode assembly group 230 are accommodated in the same housing 210, and the electrolyte accommodated in the housing 210 can flow between them. If an electrode plate of the first electrode assembly group 220 comes into contact with an electrode plate of the second electrode assembly group 230, a short circuit is likely to occur, causing damage to electrode assemblies 222. To avoid this case, the surfaces of the first electrode assembly group 220 and the second electrode assembly group 230 that are in contact with each other need to be insulated.

In a structure of the battery cell 20, for example, the battery cell 20 whose tabs 260 are disposed at an end of the electrode assembly 222 in the first direction H, an insulating member can be disposed between the first electrode assembly group 220 and the second electrode assembly group 230 to ensure that the first electrode assembly group 220 and the second electrode assembly group 230 are not in contact with each other.

In another structure of the battery cell 20, for example, the battery cell 20 whose tabs 260 are disposed at two ends of the electrode assembly 222 in the third direction W, a separator with insulation performance is at the outermost of the electrode assemblies 222 in the first electrode assembly group 220 and the second electrode assembly group 230. Therefore, the separators of the electrode assemblies 222 in the first electrode assembly group 220 and the second electrode assembly group 230 can be directly used to achieve insulation between the first electrode assembly group 220 and the second electrode assembly group 230. In the structure of such battery cell 20, space occupied by the insulating member can be saved, further improving the energy density of the battery cell 20. It can be understood that in such battery cell 20, an insulating member can alternatively be disposed to further ensure insulation between the first electrode assembly group 220 and the second electrode assembly group 230.

This can ensure that the first electrode assembly group 220 and the second electrode assembly group 230 work independently without interfering with each other, reducing the risk of a short circuit in the battery cell 20, thereby ensuring the safety performance of the battery cell 20.

According to some embodiments of this application, optionally, a first insulating member 271 is disposed between the first electrode assembly group 220 and the second electrode assembly group 230.

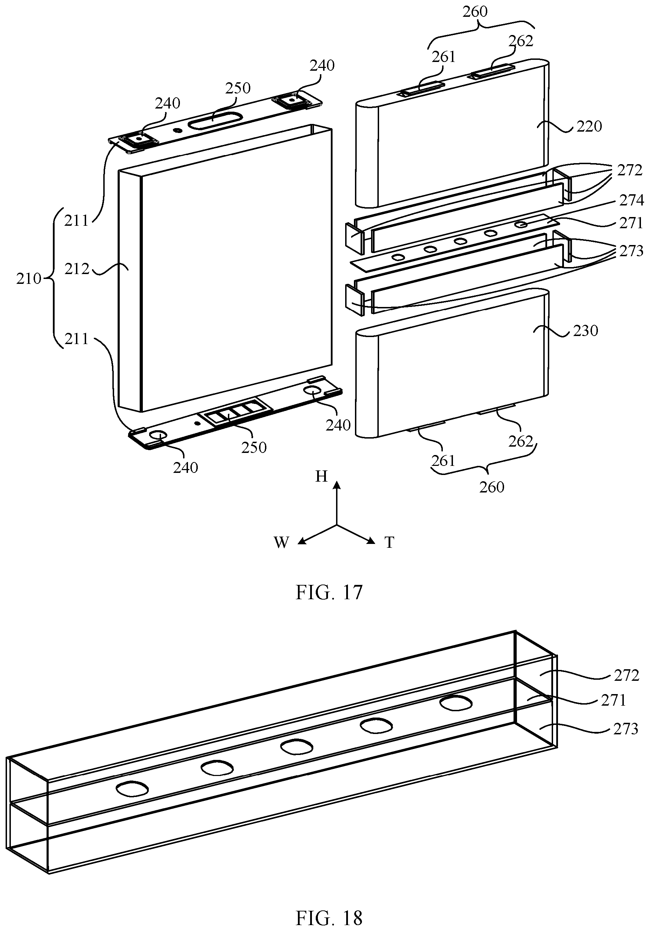

The first insulating member 271 can be disposed to ensure that the surfaces of the first electrode assembly group 220 and the second electrode assembly group 230 that are in contact with each other are insulated, as shown in FIG. 17. In the battery cell 20 shown in FIG. 17, the first insulating member 271 can insulate an end of the first electrode assembly group 220 away from the tabs 260 in the first direction H from an end of the second electrode assembly group 230 away from the tabs 260 in the first direction H. Even if the battery cell 20 is subjected to external impact, the first insulating member 271 can reduce the possibility of the first electrode assembly group 220 and the second electrode assembly group 230 coming into contact.

In a possible embodiment, the first insulating member 271 can be a plate with insulation performance or a film made of an insulating material. Optionally, the sizes of the first insulating member 271 in the second direction T and the third direction W can be greater than or equal to the maximum size of the first electrode assembly group 220 and the second electrode assembly group 230 in the second direction T and the third direction W.

The first insulating member 271 can insulate the first electrode assembly group 220 from the second electrode assembly group 230. Even if the battery cell 20 is subjected to external impact, the first insulating member 271 can ensure the insulation performance between the two, reducing the risk of a short circuit in the battery cell 20, thereby ensuring the safety performance of the battery cell 20.

According to some embodiments of this application, optionally, the first insulating member 271 is provided with a through hole 274, and the through hole 274 is configured to communicate an accommodation space of the first electrode assembly group 220 with an accommodation space of the second electrode assembly group 230.

When the first electrode assembly group 220 and the second electrode assembly group 230 are both accommodated in the housing 210 of the same battery cell 20, the electrolyte accommodated in the housing 210 can flow between the accommodation space of the first electrode assembly group 220 and the accommodation space of the second electrode assembly group 230. The through hole 274 runs through the first insulating member 271 in the first direction H, allowing the accommodation space of the first electrode assembly group 220 and the accommodation space of the second electrode assembly group 230 to communicate with each other, so that the electrolyte can at least flow between the accommodation spaces of the two electrode assembly groups in the first direction H.

This application does not limit the number and position of the through holes 274; and one or more through holes 274 can be provided on the first insulating member 271. When one through hole 274 is provided on the first insulating member 271, the through hole 274 can be located at any position, for example, the middle of the first insulating member 271. When a plurality of through holes 274 are provided on the insulating member, the plurality of through holes 274 can be arranged in a row or an array, or in a discrete form on the first insulating member 271.

The through hole 274 on the first insulating member 271 helps the electrolyte to flow between the accommodation space of the first electrode assembly group 220 and the accommodation space of the second electrode assembly group 230, ensuring that the first electrode assembly group 220 and the second electrode assembly group 230 are equally infiltrated by the electrolyte, thereby improving the stability of the battery cell 20 in providing electrical energy.

According to some embodiments of this application, optionally, a second insulating member 272 is disposed between the first electrode assembly group 220 and the housing 210, and the second insulating member 272 covers at least part of the first electrode assembly group 220. A third insulating member 273 is disposed between the second electrode assembly group 230 and the housing 210, and the third insulating member 273 covers at least part of the second electrode assembly group 230.

The second insulating member 272 is used as an example below for description. The second insulating member 272 is configured to implement insulation between the first electrode assembly group 220 and the housing 210. In a possible embodiment, the second insulating member 272 is perpendicular to the second direction T and disposed at two ends of the first electrode assembly group 220 along the second direction T; and/or the second insulating member 272 is perpendicular to the third direction W and disposed at two ends of the first electrode assembly group 220 along the third direction W.

FIG. 17 shows a case that the second insulating member 272 is disposed in both the second direction T and the third direction W. In this case, the second insulating member 272 in the second direction T can be disposed separate from or connected to the second insulating member 272 in the third direction W Optionally, the second insulating members 272 in the second direction T and the third direction W can be integrally designed as a connected frame. The frame has a hollow structure for accommodating at least part of the first electrode assembly group 220.

The second insulating member 272 can be a plate, film, or connected frame made of insulating material. The size of the second insulating member 272 in the first direction H, the second direction T, or the third direction W can be greater than the maximum size of the first electrode assembly group 220 in the same direction.

In a possible embodiment, a through hole can also be provided on the second insulating member 272, for example, a through hole that runs through the second insulating member 272 in the first direction H, so that the electrolyte can flow between the accommodation space of the first electrode assembly group 220 and the accommodation space of the second electrode assembly group 230.

The third insulating member 273 is disposed between the second electrode assembly group 230 and the housing 210, similar to the second insulating member 272. Details are not repeated herein.

The disposition of the second insulating member 272 and the third insulating member 273 can improve the insulation performance between the first electrode assembly group 220 and the second electrode assembly group 230 and the housing 210, avoiding safety hazards caused by electric leakage of the metal housing 210 and ensuring the safety performance of the battery.

According to some embodiments of this application, optionally, the second insulating member 272 and the third insulating member 273 are connected to the first insulating member 271.

As shown in FIG. 18, an end of the second insulating member 272 facing towards the first insulating member 271 along the first direction H is connected to the first insulating member 271, and an end of the third insulating member 273 facing towards the first insulating member 271 along the first direction H is also connected to the first insulating member 271. In a possible embodiment, the first insulating member 271, the second insulating member 272, and the third insulating member 273 can be prepared separately and then connected, for example, welded or bonded together. In another possible embodiment, the first insulating member 271, the second insulating member 272, and the third insulating member 273 can be integrally designed as a connected frame.

This can further strengthen insulation treatment at the edges of the electrode assembly groups, avoiding short circuits caused by the edges of the first electrode assembly group 220 and the second electrode assembly group 230 coming into contact. Especially when the battery cell 20 is subjected to external impact, the second insulating member 272 and the third insulating member 273 connected to the first insulating member 271 can reduce the shaking of the first insulating member 271, reducing the risk of failure of the first insulating member 271, thereby improving the safety of the battery cell 20.

According to some embodiments of this application, optionally, a ratio of size of the battery cell 20 in the first direction H to size in the third direction W is greater than or equal to 2, the third direction W being perpendicular to the first direction H.

The first direction H is the arrangement direction of the first electrode assembly group 220 and the second electrode assembly group 230 in the battery cell 20, also referred to as the height direction of the battery cell 20. The third direction W is perpendicular to the first direction H and can be the width direction or the thickness direction of the battery cell 20. In this embodiment of this application, the battery cell 20 mainly increases its size in the height direction to match the size of the battery module. For example, when the battery module is designed to be elongated in the first direction H, one battery cell 20 can replace originally required two battery cells 20, saving the space occupied by bottom parts of housing bodies 212 where the two battery cells 20 are in contact with each other, and reducing structures in the battery module configured to fix the battery cells 20. This improves the energy density of the battery cell 20, and also can improve the energy density of the battery. Therefore, the ratio of the size of the battery cell 20 in the first direction H to the size in the third direction W being greater than or equal to 2 can meet the size requirement of the elongated battery module for the battery cell 20.

From another perspective, if the ratio of the size of the battery cell 20 in the first direction H to the size in the third direction W is too small, the sizes of the first electrode assembly group 220 and the second electrode assembly group 230 in the first direction H are also correspondingly smaller, and the energy they can provide is also less. In a case that the ratio is greater than or equal to 2, the energy that a group of electrode assemblies can provide can be maximized.

This design can maximize the capacity of the battery cell 20 while improving the energy density of the battery cell 20.

This application further provides a battery module 100, including the battery cell 20 in any one of the above embodiments.

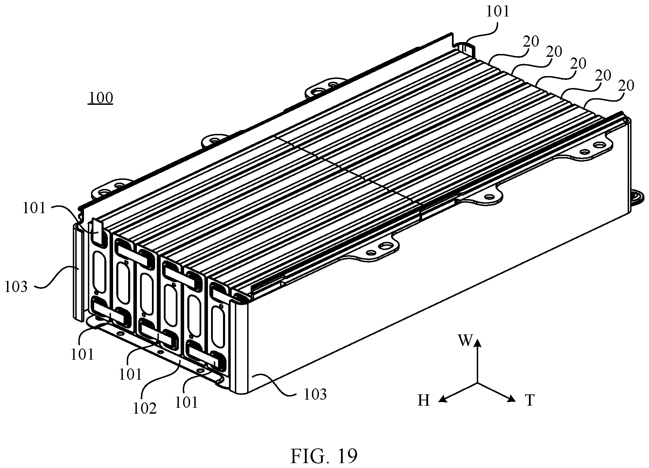

As shown in FIG. 19, a plurality of battery cells 20 can be arranged in a row, for example, arranged along a second direction T, and connected to adjacent battery cells 20 through busbars 101 to achieve series, parallel, or series-parallel connections between the battery cells 20. For the battery cell 20 located at the outermost side of the battery module 100, an electrode terminal 240 on one end of the battery cell 20 in the first direction H can be connected to an electrode terminal 240 on the other end of the battery cell 20 in the first direction H through a busbar 101. In the battery cell 20 provided in this embodiment of this application, a first electrode assembly group 220 and a second electrode assembly group 230 arranged along a first direction H can work independently. Therefore, electrode terminals 240 at two ends of one battery cell 20 in the first direction H can be connected to each other and still work normally without causing a short circuit. Optionally, a thermal insulation pad (not shown) can be placed between the battery cells 20.

In FIG. 19, a thermal management component 102, such as a water cooling plate, can be disposed on one side or both ends of the battery module 100 perpendicular to a third direction W and can be bonded to the battery module 100 through a thermal conductive adhesive. The thermal management components 102 have a cavity structure that can accommodate a fluid to adjust the temperature of the plurality of battery cells 20102. Side plates 103 can be disposed at two ends of the battery module 100 perpendicular to the second direction T to fix the battery module 100. A side of the side plate 103 facing towards the battery module 100 can be coated with an adhesive, so that when an assembly fixture clamps the side plates 103 on two sides of the battery module 100, the side plates 103 can be bonded to the outermost battery cells 20.

This application further provides a battery, characterized by including the battery module 100 in any one of the above embodiments.

This application further provides an electric apparatus including: the battery in any one of the above embodiments, where the battery is configured to provide electrical energy to the electric apparatus.

Although this application has been described with reference to the preferred embodiments, various modifications to this application and replacements of the components therein with equivalents can be made without departing from the scope of this application. In particular, as long as there is no structural conflict, the various technical features mentioned in the implementations can be combined in any manners. This application is not limited to the specific embodiments disclosed in this specification but includes all technical solutions falling within the scope of the claims.

## Claims

1. A battery cell, **characterized by** comprising:
a housing; and
a first electrode assembly group and a second electrode assembly group that are accommodated within the housing, wherein the first electrode assembly group and the second electrode assembly group are arranged along a first direction, the first electrode assembly group and the second electrode assembly group each comprise at least one electrode assembly, and electrode terminals of the first electrode assembly group and electrode terminals of the second electrode assembly group are respectively located on two walls of the housing that are disposed opposite along the first direction.

2. The battery cell according to claim 1, **characterized in that**
the first electrode assembly group comprises a plurality of first electrode assembly subgroups, the first electrode assembly subgroup comprises at least one electrode assembly, the plurality of first electrode assembly subgroups are arranged in a row along a second direction, and each first electrode assembly subgroup is connected to one pair of electrode terminals, the second direction being perpendicular to the first direction; and
the second electrode assembly group comprises a plurality of second electrode assembly subgroups, the second electrode assembly subgroup comprises at least one electrode assembly, the plurality of second electrode assembly subgroups are arranged in a row along the second direction, and each second electrode assembly subgroup is connected to one pair of electrode terminals.

3. The battery cell according to claim 1, **characterized in that**
the first electrode assembly group comprises a plurality of first electrode assembly subgroups, the first electrode assembly subgroup comprises at least one electrode assembly, the plurality of first electrode assembly subgroups are arranged into an array along the second direction and a third direction, and each first electrode assembly subgroup is connected to one pair of electrode terminals, the first direction, the second direction, and the third direction being perpendicular to each other; and
the second electrode assembly group comprises a plurality of second electrode assembly subgroups, the second electrode assembly subgroup comprises at least one electrode assembly, the plurality of second electrode assembly subgroups are arranged into an array along the second direction and the third direction, and each second electrode assembly subgroup is connected to one pair of electrode terminals.

4. The battery cell according to claim 1, **characterized in that**
the first electrode assembly group comprises a plurality of electrode assemblies arranged along a second direction, and the plurality of electrode assemblies in the first electrode assembly group are connected to one pair of electrode terminals, the second direction being perpendicular to the first direction; and
the second electrode assembly group comprises a plurality of electrode assemblies arranged along the second direction, and the plurality of electrode assemblies in the second electrode assembly group are connected to one pair of electrode terminals.

5. The battery cell according to any one of claims 1 to 4, **characterized in that**
the housing comprises a housing body with openings at two ends along the first direction and two first walls, the two first walls are respectively disposed at the two ends of the housing body along the first direction and configured to cover the housing body, the first wall is perpendicular to the first direction, and electrode terminals of the first electrode assembly group and electrode terminals of the second electrode assembly group are respectively disposed on the two first walls.

6. The battery cell according to claim 5, **characterized in that**
the electrode assembly comprises tabs, and the tabs are disposed at an end of the electrode assembly in the first direction and are connected to the electrode terminals on the first wall.

7. The battery cell according to claim 5 or 6, **characterized in that**
the first wall is provided with a pressure relief mechanism.

8. The battery cell according to claim 5, **characterized in that**
the electrode assembly comprises tabs, and the tabs are disposed at two ends of the electrode assembly in a third direction and are connected to the electrode terminals on the first wall, the third direction being perpendicular to the first direction.

9. The battery cell according to claim 8, **characterized in that**
the housing body comprises second walls, the second wall is perpendicular to the third direction, and the second wall is provided with a pressure relief mechanism.

10. The battery cell according to any one of claims 1 to 9, **characterized in that**
surfaces of the first electrode assembly group and the second electrode assembly group that are in contact with each other are insulated.

11. The battery cell according to claim 10, **characterized in that**
a first insulating member is disposed between the first electrode assembly group and the second electrode assembly group.

12. The battery cell according to claim 11, **characterized in that**
the first insulating member is provided with a through hole, and the through hole is configured to communicate an accommodation space of the first electrode assembly group with an accommodation space of the second electrode assembly group.

13. The battery cell according to claim 11 or 12, **characterized in that**
a second insulating member is disposed between the first electrode assembly group and the housing, and the second insulating member covers at least part of the first electrode assembly group; and
a third insulating member is disposed between the second electrode assembly group and the housing, and the third insulating member covers at least part of the second electrode assembly group.

14. The battery cell according to claim 13, **characterized in that**
the second insulating member and the third insulating member are connected to the first insulating member.

15. The battery cell according to any one of claims 1 to 14, **characterized in that**
a ratio of size of the battery cell in the first direction to size in the third direction is greater than or equal to 2, the third direction being perpendicular to the first direction.

16. A battery module, **characterized by** comprising:
the battery cell according to any one of claims 1 to 15.

17. A battery, **characterized by** comprising:
the battery module according to claim 16.

18. An electric apparatus, **characterized by** comprising the battery according to claim 17, wherein the battery is configured to supply electrical energy to the electric apparatus.
